# EUROPÄISCHE PATENTSCHRIFT

(11) **EP 2 882 808 B1**
(45) Veröffentlichungstag und Bekanntmachung des Hinweises auf die Patenterteilung: **12.10.2016**
(21) Anmeldenummer: 13745054.0
(22) Anmeldetag: 01.08.2013
(51) Int. Cl.: C08L 61/00, C07D 487/04, C08J 3/00, C09D 4/00, C08L 61/24, G01N 21/00

(54) **STRAHLUNGSHÄRTBARE FORMULIERUNGEN MIT HOHER HAFTUNG**
RADIATION-CURABLE FORMULATIONS WITH HIGH ADHESION
FORMULATIONS À FORTE ADHÉRENCE DURCISSABLES PAR RAYONNEMENT

(30) Priorität: 09.08.2012 US 201261681170 P; 09.08.2012 EP 12179892
(43) Veröffentlichungstag der Anmeldung: 17.06.2015
(73) Patentinhaber: BASF SE, 67056 Ludwigshafen am Rhein (DE)
(72) Erfinder: BECKER, Axel, 67122 Altrip (DE); BECK, Erich, 68526 Ladenburg (DE); BIEHLER, Manfred, 76831 Ilbesheim (DE)
(74) Vertreter: BASF IP Association
(86) Internationale Anmeldenummer: PCT/EP2013/066162
(87) Internationale Veröffentlichungsnummer: WO 2014/023639

(56) Entgegenhaltungen:
- WO-A1-2010/144901
- WO-A1-2010/144903
- WO-A2-2009/095282
- DE-A1- 19 739 620
- DE-A1-102004 026 325

## Beschreibung

Die vorliegende Erfindung beschreibt strahlungshärtbare Formulierungen, die Beschichtungen mit hoher Haftung auf Folien und niedrigem Schrumpf ergeben, deren Verwendung und Verfahren zur Beschichtung von Folien mit Hilfe dieser Formulierungen.

Beispielsweise aus EP 2239286 A1 sind Zweikomponenten-Lacke bekannt, die zur Beschichtung von Substraten eingesetzt werden können und häufig eine gute Haftung zeigen.

Nachteilig an Zweikomponenten-Lacken ist jedoch immer eine begrenzte Topfzeit, die die Verarbeitbarkeit der Beschichtungsmasse begrenzt.

Gewünscht wird jedoch eine möglichst lange Verarbeitbarkeit von Beschichtungsmassen, wie sie beispielsweise strahlungshärtbare Beschichtungsmassen bieten.

Aus EP 902065 (= US 6096797) sind strahlungshärtbare Beschichtungsmassen bekannt, die Kondensationsharze enthalten. Diese Beschichtungsmassen zeigen jedoch eine unbefriedigende Haftung.

Aus EP 789065 sind strahlungshärtbare Beschichtungsmassen, die fettsäuremodifizierte Polyesterharze enthalten, bekannt. Die Modifizierung mit Fettsäuren bewirkt eine erhöhte Haftung der Beschichtung auf Untergründen, verschlechtern jedoch die Kompatibilität mit gängigen strahlungshärtbaren Beschichtungsmassen.

Aufgabe der vorliegenden Erfindung war es, strahlungshärtbare Formulierungen mit guten Applikationseigenschaften zu entwickeln, die auf Folien eine hohe Haftung zeigen und zusätzlich lediglich eine geringen Schrumpf zeigen.

Die Aufgabe wurde gelöst durch strahlungshärtbare Formulierungen, enthaltend
(A) mindestens ein Kondensationsharz, aufgebaut aus Harnstoff oder Harnstoffderivaten a1) und Ketonen oder Aldehyden a2), welche ausgewählt sind aus C-H aciden Aldehyden bzw. Ketonen oder deren Gemische mit Formaldehyd,
(B) mindestens einer strahlungshärtbare Verbindung mit mindestens 2 Acryloyl- oder Methacryloylgruppen,
(C) mindestens einer strahlungshärtbaren Verbindung mit freien Säuregruppen,
(D) mindestens einem (Meth)acrylsäurealkylester, dessen Alkylrest mindestens 8 Kohlenstoffatome aufweist,
(E) optional mindestens ein Lackhilfsmittel und/oder Additiv, bevorzugt zur Veränderung der Benetzungseigenschaften und/oder Verlaufseigenschaften, sowie
(F) optional mindestens ein Photoinitiator,
   wobei die Formulierung eine Säurezahl gemäß DIN EN ISO 3682 (potentiometrisch) von 10 bis 100 mg KOH/g, bezogen auf die Summe der Komponenten (A) bis (F), aufweist.

Die Säurezahl beträgt bevorzugt mindestens 15, besonders bevorzugt mindestens 20, ganz besonders bevorzugt mindestens 25 und insbesondere mindestens 30 mg KOH/g.

Die Säurezahl beträgt bevorzugt bis zu 90, besonders bevorzugt bis zu 80, ganz besonders bevorzugt bis zu 70 und insbesondere bis zu 60 mg KOH/g.

Die erfindungsgemäßen Formulierungen zeigen auf Folien eine hohe Haftung und einen geringen Schrumpf und lassen sich so wählen, daß sie zur Auftragung walz- und/oder spritzfähig sind. Infolgedessen ist auch die Verwendung der erfindungsgemäßen Formulierungen zur Beschichtung von Folien Gegenstand der vorliegenden Erfindung.

Ein weiterer Gegenstand der vorliegenden Erfindung ist ein Verfahren zur Beschichtung von Folien, in dem man eine erfindungsgemäße Formulierung auf eine Folie aufbringt, zumindest teilweise durch Strahlung härtet und anschließend mindestens eine weitere strahlungshärtbare Beschichtungsmasse aufbringt und abschließend durch Strahlung vollständig härtet.

Bei der Komponente (A) handelt es sich um mindestens ein, beispielsweise ein bis drei, bevorzugt ein bis zwei und besonders bevorzugt genau ein Kondensationsharz, aufgebaut aus Harnstoff oder Harnstoffderivaten a1) und Ketonen oder Aldehyden a2), welche ausgewählt sind aus C-H aciden Aldehyden bzw. Ketonen oder deren Gemische mit Formaldehyd. Die Beimischung der Komponente (A) in die erfindungsgemäße Formulierung bewirkt eine Verringerung des Schrumpfs der Beschichtungsmasse bei Härtung.

Das Kondensationsharz A) ist aufgebaut aus Harnstoff oder Harnstoffderivaten a1) und Ketonen-Aldehyden a2).
Beim Harnstoff oder den Harnstoffderivaten a1) handelt es sich insbesondere um solche der Formel

R¹-NH-(C=X)-NH-R² (I)

oder

R¹-NH-(C=X)-NH-A-NH-(C=X)-NH-R² (II)

worin R¹ und R² unabhängig voneinander für ein H-Atom oder einen C₁-C₂₀-Alkylrest stehen, A für einen C₁-C₁₀-Alkylenrest
und X für Sauerstoff oder Schwefel steht.

Bevorzugt stehen R¹ und R² für ein H-Atom oder eine C₁-C₄-Alkylgruppe, A für eine C₁-C₄-Alkylengruppe und X für Sauerstoff.

Besonders bevorzugt sind Verbindungen der Formel (I).
Ganz besonders bevorzugt ist Harnstoff (H₂N-(C=O)-NH₂).

Bei a2) handelt es sich um C-H acide Aldehyde oder Ketone oder deren Gemische mit Formaldehyd. Bevorzugt sind CH-acide Aldehyde oder deren Gemische mit Formaldehyd.

C-H acide Aldehyde oder Ketone sind solche mit einem aciden Wasserstoffatom am α-C-Atom zur Carbonylgruppe.

Bevorzugt sind C-H acide Aldehyde.

Geeignet sind z. B. C-H acide Aldehyde der Formel

R³R⁴CH-CHO (III)

wobei R³ und R⁴ unabhängig voneinander für ein H-Atom oder eine C₁-C₂₀-, bevorzugt C₁-C₆-Alkylgruppe, eine Arylgruppe oder eine C₇ bis C₂₀-, bevorzugt C₇ - C₁₄-Alkarylgruppe stehen. Formaldehyd (R³ und R⁴ = H) ist ausgeschlossen.

Besonders bevorzugt sind Verbindungen der Formel (III) mit insgesamt weniger als 20 C-Atomen. Vorzugsweise steht maximal einer der Reste R³ und R⁴ für eine Alkylgruppe, Arylgruppe oder Alkarylgruppe.

Als Keton sei z. B. Cyclohexanon genannt.

Bevorzugte Verbindungen a2) sind insbesondere Isobutyraldehyd, 2-Ethylhexanal, 2-Methylpentanal, 2-Phenylpropanol und Isovaleraldehyd.

Bei Verbindungen a2) kann es sich auch um Gemische der vorstehenden C-H aciden Aldehyde und Ketone mit Formaldehyd handeln.

Vorzugsweise handelt es sich bei maximal 50 mol-%, insbesondere maximal 30 mol-% der Verbindungen a2) um Formaldehyd.

Die Herstellung des Kondensationsharzes (A) kann z. B. durch saure Kondensation der Verbindungen a1) und a2) insbesondere im Temperaturbereich von 60 bis 150 °C erfolgen. Entsprechende Verfahren sind dem Fachmann bekannt und z. B. im EP-A-2794 beschrieben.

Bevorzugt enthält das Kondensationsharz (A) die Verbindungen a1) und a2) im Molverhältnis 1 : 0,5 bis 1 : 20, besonders bevorzugt 1 : 4 bis 1 : 10. Der Erweichungspunkt (nach DIN 53 180) des Harzes liegt vorzugsweise zwischen 60 und 140 °C.

Das Kondensationsharz (A) liegt vorzugsweise lösemittelfrei vor. Es kann z. B. auch als Lösung in einem organischen Lösungsmittel, z. B. Butylacetat, Ethanol oder Methylethylketon, vorliegen.

Bei der mindestens einen, bevorzugt ein bis vier, besonders bevorzugt ein bis drei, ganz besonders bevorzugt ein bis zwei und ganz besonders bevorzugt genau einen strahlungshärtbaren Verbindung (B) mit mindestens 2 Acryloyl- oder Methacryloylgruppen, bevorzugt zwei bis zehn, besonders bevorzugt zwei bis sechs, ganz besonders bevorzugt drei bis vier Acryloyl-oder Methacryloylgruppen, bevorzugt Acryloylgruppen, handelt es sich bevorzugt um (Meth)acrylsäureester von Polyolen, bevorzugt alkoxlierten Polyolen.

Beispiele für (Meth)acrylsäureester von Polyolen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder -tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt

Bevorzugt sind (Meth)Acrylate von Verbindungen der Formel (IVa) bis (IVd), 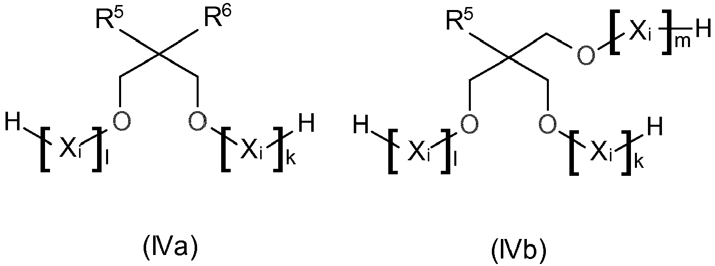 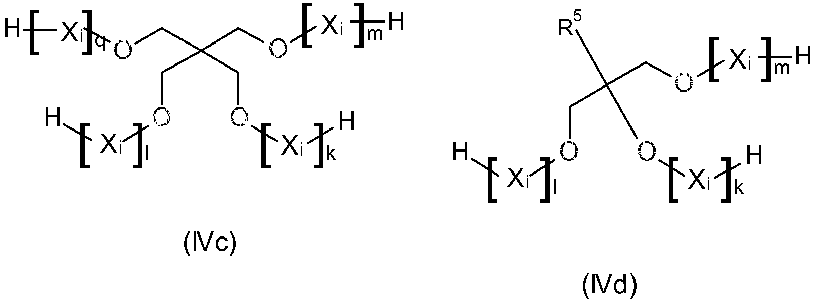 worin
- R⁵ und R⁶: unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
- k, l, m, q: unabhängig voneinander je für eine ganze Zahl von 1 bis 10, bevorzugt 1 bis 5 und besonders bevorzugt 1 bis 3 steht und jedes Xᵢ für i = 1 bis k, 1 bis I, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Besonders bevorzugt handelt es sich dabei um (Meth)Acrylate von ein- bis zwanzigfach und ganz besonders bevorzugt drei- bis zehnfach ethoxyliertem, propoxyliertem oder gemischt ethoxyliertem und propoxyliertem und insbesondere ausschließlich ethoxyliertem Glycerin, Trimethylolpropan, Trimethylolethan oder Pentaerythrit.

Ganz besonders bevorzugt Trimethylolpropantriacrylat, Pentaerythrittetraacrylat, und Acrylate von ein- bis zwanzigfach alkoxyliertem, besonders bevorzugt ethoxyliertem Trimethylolpropan, Glycerin oder Pentaerythrit.

Bei der Verbindung (C) handelt es sich um mindestens eine strahlungshärtbare Verbindung mit mindestens einer, bevorzugt ein bis drei, besonders bevorzugt ein bis zwei und ganz besonders bevorzugt einer freien Säuregruppe.

Bei den freien Säuregruppen kann es sich beispielsweise um Carboxyl-, Sulfat-, Sulfit-, Phosphat- oder Phosphitgruppen bzw. im Fall von Sulfat-, Sulfit-, Phosphat- oder Phosphitgruppen deren Partialester handeln.

Die Verbindungen (C) weisen mindestens eine strahlungshärtbare Gruppe, bevorzugt ein bis zwei strahlungshärtbare Gruppen auf, besonders bevorzugt (Meth)acrylatgruppen

Bevorzugte Verbindungen (C) weisen ein Molekulargewicht von nicht mehr als 1000 g/mol auf, besonders bevorzugt nicht mehr als 800 g/mol, ganz besonders bevorzugt nicht mehr als 500 g/mol, insbesondere von nicht mehr als 400 und speziell von nicht mehr als 350 g/mol.

Beispiele für Verbindung (C) sind Acrylsäure, Methacrylsäure, Ethacrylsäure, α-Chloracrylsäure, Crotonsäure, Maleinsäure, Vinylsulfonsäure, Vinylphosphonsäure, Maleinsäure, Fumarsäure, Itaconsäure, Citraconsäure, Mesaconsäure, Glutaconsäure, Aconitsäure, Zimtsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryl-oxypropylsulfonsäure, Allylphosphonsäure, Styrolsulfonsäure, 2-Acrylamido-2methylpropansulfonsäure und 2-Acryl-amido-2-methylpropanphosphonsäure.

In einer bevorzugten Ausführungsform handelt es sich bei der Verbindung (C) um Verbindungen der Formeln (Va) und (Vb), sowie deren Gemische 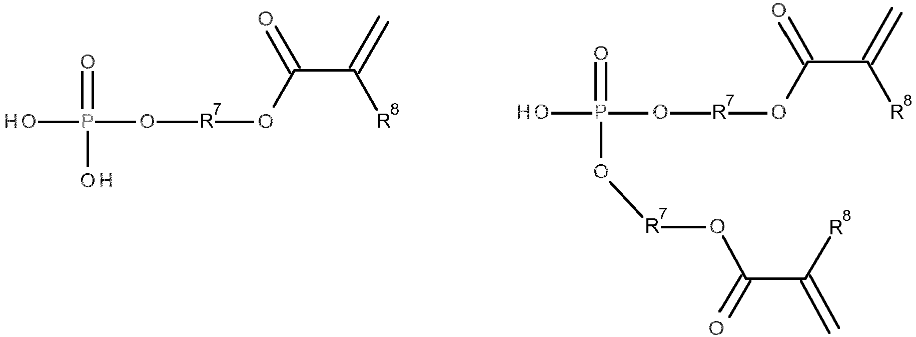 worin
- R⁷: C₂ bis C₆-Alkylen und
- R⁸: Wasserstoff oder Methyl
bedeuten.

C₂-C₆-Alkylen bedeutet beispielsweise 1,2-Ethylen, 1,2-Propylen, 1,3-Propylen, 1,2-Butylen, 1,3-Butylen, 1,4-Butylen, 1,5-Pentylen oder 1,6-Hexylen, bevorzugt 1,2-Ethylen, 1,2-Propylen, 1,3-Propylen oder 1,4-Butylen, besonders bevorzugt 1,2-Ethylen oder 1,2-Propylen und ganz besonders bevorzugt 1,2-Ethylen.

R⁸ ist dabei bevorzugt Methyl.

Bei der Komponente (D) handelt es sich um mindestens einen, bevorzugt ein bis drei, besonders bevorzugt ein bis zwei und ganz besonders bevorzugt genau einen (Meth)acrylsäurealkylester, dessen Alkylrest mindestens 8 Kohlenstoffatome aufweist, bevorzugt acht bis 20, besonders bevorzugt acht bis 16, ganz besonders bevorzugt acht bis 14 und insbesondere zehn bis zwölf.

Ganz besonders bevorzugt ist die Komponente (D) ausgewählt aus der Gruppe bestehend aus n-Octylacrylat, 2-Ethylhexylacrylat, 3-Propylheptylacrylat, n-Decylacrylat, Laurylacrylat, n-Octylmethacrylat, 2-Ethylhexylmethacrylat, 3-Propylheptylmethacrylat, n-Decylmethacrylat und Laurylmethacrylat.

Insbesondere handelt es sich bei der Komponente (D) um 2-Ethylhexylacrylat, 3-Propylheptylacrylat oder Laurylacrylat.

Bei der optionalen Komponente (E) handelt es sich um mindestens ein Lackhilfsmittel und/oder Additiv, bevorzugt zur Veränderung der Benetzungseigenschaften und/oder Verlaufseigenschaften.

Als (E) optionale Lackhilfsmittel und Additive zu nennen sind beispielsweise Antioxidantien, Stabilisatoren, Aktivatoren (Beschleuniger), Füllmittel, Farbstoffe, antistatische Agentien, Flammschutzmittel, oberflächenaktive Agentien, Viskositätsmodifikatoren oder Plastifizierer.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis*iso*-butyronitril, Cyclohexylsulfonylacetylperoxid, Di-*iso*-propylpercarbonat, *tert*-Butylperoktoat oder Benzpinakol, sowie beispielsweise solche thermisch aktivierbare Initiatoren, die eine Halbwertszeit bei 80 °C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Geeignete Füllstoffe umfassen Silikate, z. B. durch Hydrolyse von Siliciumtetrachlorid erhältliche Silikate wie Aerosil® der Fa. Evonik, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin® -Marken der Firma BASF SE, Ludwigshafen) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Bei der optionalen Komponente (F) handelt es sich um mindestens einen Photoinitiator, bevorzugt ein bis drei und besonders bevorzugt um ein Photoinitiator oder Gemische aus zwei Photoinitiatoren.

Der Photoinitiator (F) ist in der Regel dann verzichtbar, wenn die Härtung der Beschichtungsmasse mit Elektronenstrahlen erfolgt. Für eine Härtung der Beschichtungsmasse mit UV-Strahlung ist jedoch mindestens ein Photoinitiator erforderlich.
Als Photoinitiatoren können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen beispielsweise Phosphinoxide, Benzophenone, α-Hydroxy-alkyl-arylketone, Thioxanthone, Anthrachinone, Acetophenone, Benzoine und Benzoinether, Ketale, Imidazole oder Phenylglyoxylsäuren

In Betracht kommen solche Photoinitiatoren, wie sie beschrieben sind in WO 2006/005491 A1, Seite 21, Zeile 18 bis Seite 22, Zeile 2 (entspricht US 2006/0009589 A1, Absatz [0150]), was hiermit durch Bezugnahme Bestandteil der vorliegenden Offenbarung sei.

Beispielhaft genannt seien für die einzelnen Klassen folgende Verbindungen:
Mono- oder Bisacylphosphinoxide, wie z.B. Irgacure® 819 (Bis(2,4,6-Trimethylbenzoyl)phenyl-phosphinoxid), wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO), Ethyl-2,4,6-trimethylbenzoylphenylphosphinat, Bis(2,6-dimethoxybenzoyl)-2,4,4-trimethylpentylphosphinoxid,
Benzophenon, 4-Aminobenzophenon, 4,4'-Bis(dimethylamino)benzophenon, 4-Phenylbenzophenon, 4-Chlorbenzophenon, Michlers Keton, o-Methoxybenzophenon, 2,4,6-Trimethylbenzophenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon
1-Benzoylcyclohexan-1-ol (1-Hydroxy-cyclohexyl-phenylketon), 2-Hydroxy-2,2-dimethylacetophenon (2-Hydroxy-2-methyl-1-phenyl-propan-1-on), 1-Hydroxyacetophenon, 1-[4-(2-Hydroxyethoxy)-phenyl]-2-hydroxy-2-methyl-1-propan-1-on, Polymeres, das 2-Hydroxy-2-methyl-1-(4-isopropen-2-yl-phenyl)-propan-1-on einpolymerisiert enthält (Esacure® KIP 150)
10-Thioxanthenon, Thioxanthen-9-on, Xanthen-9-on, 2,4-Dimethylthioxanthon, 2,4-Diethylthioxanthon, 2,4-Di-iso-propylthioxanthon, 2,4-Dichlorthioxanthon, Chloroxanthenon,
β-Methylanthrachinon, tert-Butylanthrachinon, Anthrachinoncarbonylsäureester, Benz[de]anthracen-7-on, Benz[a]anthracen-7,12-dion, 2-Methylanthrachinon, 2-Ethylanthrachinon, 2-tert-Butylanthrachinon, 1-Chloranthrachinon, 2-Amylanthrachinon
Acetophenon, Acetonaphthochinon, Valerophenon, Hexanophenon, α-Phenylbutyrophenon, p-Morpholinopropiophenon, Dibenzosuberon, 4-Morpholinobenzophenon, p-Diacetylbenzol, 4'-Methoxyacetophenon, α-Tetralon, 9-Acetylphenanthren, 2-Acetylphenanthren, 3-Acetylphenanthren, 3-Acetylindol, 9-Fluorenon, 1-Indanon, 1,3,4-Triacetylbenzol, 1-Acetonaphthon, 2-Ace-tonaphthon, 2,2-Dimethoxy-2-phenylacetophenon, 2,2-Diethoxy-2-phenylacetophenon, 1,1-Dichloracetophenon, 1-Hydroxyacetophenon, 2,2-Diethoxyacetophenon, 2-Methyl-1-[4-(methylthio)phenyl]-2-morpholinopropan-1-on, 2,2-Dimethoxy-1,2-diphenylethan-2-on, 2-Benzyl-2-di-methylamino-1-(4-morpholinophenyl)-butan-1-on
4-Morpholinodeoxybenzoin, Benzoin, Benzoin-iso-butylether, Benzoin-tetrahydropyranylether, Benzoin-methylether, Benzoin-ethylether, Benzoin-butylether, Benzoin-iso-propylether, 7-H-Benzoin-methylether,
Acetophenondimethylketal, 2,2-Diethoxyacetophenon, Benzilketale, wie Benzildimethylketal,
Phenylglyoxalsäuren wie in DE-A 198 26 712, DE-A 199 13 353 oder WO 98/33761 beschrieben
Benzaldehyd, Methylethylketon, 1-Naphthaldehyd, Triphenylphosphin, Tri-o-Tolylphosphin, 2,3-Butandion
Als Gemisch zu nennen sind insbesondere 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphoshinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon, oder 2,4,6-Trimethylbenzophenon und 4-Methylbenzophenon und 2,4,6-Trimethylbenzoyldiphenylphosphinoxid.

Die erfindungsgemäßen Formulierungen sind bevorzugt wie folgt zusammengesetzt:
(A) 20 bis 50 Gew%, bevorzugt 30 bis 35 Gew%
(B) 20 bis 40 Gew%, bevorzugt 25 bis 30 Gew%
(C) 2 bis 10 Gew%, bevorzugt 4 bis 8 Gew%
(D) 10 bis 30 Gew%, bevorzugt 15 bis 25 Gew%
(E) 1 bis 10 Gew%, bevorzugt 3 bis 8 Gew%
(F) 0,5 bis 5 Gew%, bevorzugt 2 bis 4 Gew%
mit der Maßgabe, daß die Summe immer 100 Gew% beträgt.

Die erfindungsgemäßen Formulierungen können bevorzugt verwendet werden zur Beschichtung von Folien aus Papier und/oder Vliesen, bevorzugt Papier, die mit Melamin-Formaldehyd-Harzen imprägniert sind. Dabei werden unter Melamin-Formaldehyd-Harzen im Rahmen der vorliegenden Schrift Reaktionsprodukt aus Melamin, Formaldehyd und Alkoholen verstanden. Zusammensetzung und Natur des zur Imprägnierung eingesetzten Melamin-FormaldehydHarzes spielen dabei erfindungsgemäß keine oder allenfalls eine untergeordnete Rolle.

Die so beschichteten Folien können eingesetzt werden zum Beschichten von Holz, Holzwerkstoffen und holzhaltigen Substraten, bevorzugt von Faserplatten. Denkbar wäre auch die Beschichtung von Cellulosefasern, wie beispielsweise Papier, Pappe oder Karton.

Der Begriff "Holzwerkstoffe" wird im Rahmen der vorliegenden Schrift als Oberbegriff für verschiedene Produkte verwendet, die durch Zerlegen des Holzes und anschließendes Zusammenfügen, meist unter Zugabe anderer Stoffe wie z. B. Klebstoffe bzw. Harze oder mineralisches Bindemittel entstehen. Dazu gehören beispielsweise Massivholzplatten (DIN EN 12775: 2001-04), Sperrholz (DIN EN 313-2: 1999-11), Spanplatten (DIN EN 300: 1997-06, DIN EN 309: 1992-08, DIN EN 633: 1993-12), Schichtpreßstoffplatten (DIN EN 438-1: 2002-06) und Faserplatten (DIN EN 316: 1999-12) sowie aus Furnieren verleimtes Schichtholz.

Massivholzplatten sind aus einlagig oder auch mehrlagig verklebten Holzstücken zusammengesetzte Platten.

Sperrholz stellt einen Verbund miteinander verklebter Lagen dar, wobei die Faserrichtungen aufeinander folgender Lagen zueinander rechtwinklig angeordnet sind und sich dadurch gegenseitig absperren.

Spanplatten werden durch Verpressen kleiner Holzstückchen mit Kunstharzen, Naturstoffen oder - wenn auch weniger bevorzugt - mineralischen Materialien wie Zement (Holzzementplatten) und Gips hergestellt. Daher wird zwischen Spanplatten mit einer Ausrichtung der Späne (OSB = orientied structural board), Spanplatten mit einer geringen bzw. keiner Ausrichtung der Späne (z. B. Flachpreßplatten) und zementgebundenen Spanplatten unterschieden. Sie sind isotroper als Vollholz, haben besseres Stehvermögen und in Abhängigkeit von der Dichte größere Homogenität der Oberfläche. Sie werden nach Gebrauchstypen eingeteilt und nach dem Gehalt an freiem Formaldehyd klassifiziert. Spanplatten dienen zumeist als Träger für weitere Beschichtungen, beispielsweise Folienbeschichtungen.

Schichtpreßstoffplatten (dekorative Hochdruck-Schichtpreßstoffplatten) bestehen aus Papierbahnen, die beispielsweise mit Melamin-Harzen und/oder Phenol-Harzen getränkt (Melamin-Schichtpreßplatten) und in der Wärme verpreßt sind. Sie werden nach DIN EN 438-1: 1992-12 je nach der Art der Verpressung als HPL (von englisch high pressure laminates) oder CPL (von englisch continuate pressure laminates) bezeichnet und bevorzugt auf hochstrapazierfähigen Möbeln, z. B. Arbeitsplatten in der Küche, eingesetzt.

Faserplatten werden aus verholzten Fasern ohne Bindemittel im Naßverfahren oder mit Bindemittel im Trockenverfahren als ein- oder mehrschichtige Platten hergestellt. Sie sind ebenfalls in der Plattenebene weitgehend isotrop. Ihre Eigenschaften hängen vom Mahlgrad des Faserstoffes, den Herstellungsbedingungen (Preßtemperatur, -dauer und -verlauf), der Beleimungsart und -menge, von der Dichte und ihrer Verteilung über den Plattenquerschnitt, der Materialfeuchte und der Nachbehandlung ab. Man unterscheidet poröse, harte sowie mittelharte Faserplatten für das Bauwesen, mittelharte Faserplatten für Möbel, Bitumen-Faserplatten und dekorative kunststoffbeschichtete Faserplatten. Die mittelharten werden umgangssprachlich als mitteldichte Faserplatten (MDF) bezeichnet. Sie haben Stärken von in der Regel 3 - 60 mm und Rohdichten von 350 - 850 kg/m³. Hochdichte Faserplatten (HDF) weisen sogar noch höhere Rohdischten auf. Aufgrund ihrer sehr homogenen Struktur können sie auch auf profilierten Schmalflächen direkt kaschiert und lackiert werden

Als bevorzugte Holzwerkstoffe sind Faserplatten zu nennen.

Die Beschichtung der Folien mit den erfindungsgemäßen Formulierungen erfolgt nach üblichen, dem Fachmann bekannten Verfahren, wobei man mindestens eine erfindungsgemäße Formulierung auf die zu beschichtende Folie in der gewünschten Stärke aufbringt und gegebenenfalls zumindest teilweise strahlungshärtet. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren, bevorzugt durch Spritzen und Walzen erfolgen. Als Spritzverfahren können z.B. Luftdruck-, Airless- oder Elektrostatik-Spritzverfahren Anwendung finden.

Die Beschichtungsstärke liegt in der Regel in einem Bereich von etwa 3 bis 50 g/m² und vorzugsweise 5 bis 20 g/m².

Weiterhin wird ein Verfahren zur Beschichtung von Folien offenbart, in dem man mindestens eine erfindungsgemäße Formulierung auf eine Folie aufbringt, zumindest teilweise durch Strahlung härtet. Im Anschluß kann man die so erhaltene Beschichtung optional mit einem Dekordruck versehen und anschließend mindestens eine weitere strahlungshärtbare Beschichtungsmasse aufbringen, woraufhin man abschließend durch Strahlung vollständig härtet.

Art und Natur der weiteren strahlungshärtbaren Beschichtungsmasse ist nicht erfindungswesentlich. Es kann sich dabei um beliebige, dem Fachmann an sich strahlungshärtbare Beschichtungsmasse handeln. Bevorzugt handelt es sich bei diesen um Polyether(meth)acrylate, Polyester(meth)acrylate, Epoxy(meth)acrylate oder Urethan(meth)acrylate, bevorzugt Polyester(meth)acrylate und Urethan(meth)acrylate und besonders bevorzugt handelt es sich um ein Urethan(meth)acrylat.

Die Strahlungshärtung erfolgt mit energiereichem Licht, z.B. UV-Licht oder Elektronenstrahlen. Die Strahlungshärtung kann bei höheren Temperaturen erfolgen. Bevorzugt ist dabei eine Temperatur oberhalb der T_{g} des strahlungshärtbaren Bindemittels.

Die Härtung durch Elektronenstrahlen oder UV Belichtung kann unter sauerstoffhaltiger Atmosphäre oder bevorzugt unter Inertgas erfolgen, gegebenenfalls bei Temperaturen bis zur Höhe der Trocknungstemperatur.

Strahlungshärtung heißt hier die radikalische Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Neben einer Strahlungshärtung können noch weitere Härtungsmechanismen involviert sein, beispielsweise thermische-, Feuchtigkeits-, chemische und/oder oxidative Härtung, dies ist jedoch weniger bevorzugt.

Gegebenenfalls kann, wenn mehrere Schichten des Beschichtungsmittels übereinander aufgetragen werden, nach jedem Beschichtungsvorgang eine Trocknung und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Laser, gepulste Lampen (Blitzlicht), Halogenlampen Elektronenblitzeinrichtungen, wodurch eine Strahlungshärtung ohne Photoinitiator möglich ist, oder Excimerstrahler.

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

### Beispiele

Die Beschichtungsmassen gemäß der nachstehenden Tabelle wurden in einer Schichtdicke von ca. 15 g/m² auf mit Melamin-Formaldehyd-Harz imprägniertes Papier aufgezogen, durch UV Bestrahlung mit einem Quecksilberdampfstrahler (Leistung 120 W/cm) bei einer Geschwindigkeit von 5 m/min angeliert und mit einem flexiblen Decklack (ca. 20 g/m²) überlackiert. Dieser wurde dann durch UV Bestrahlung mit einem Quecksilberdampfstrahler (Leistung 120 W/cm) bei einer Geschwindigkeit von 5 m/min gehärtet.

Die Zusammensetzung des Decklackes war wie folgt

| | |
|---|---|
| Laromer® PE 44 F | 33,0 Teile |
| Laromer® LR 8981 | 33,0 Teile |
| Laromer® DPGDA | 30,0 Teile |
| Irgacure® 500 | 4,0 Teile |

Bei Laromer® PE 44 F der BASF SE, Ludwigshafen handelt es sich um ein handelsübliches Polyesteracrylat.

Bei Laromer® LR 8981 der BASF SE, Ludwigshafen handelt es sich um ein weiteres handelsübliches Polyesteracrylat.

Bei Laromer® DPGDA der BASF SE, Ludwigshafen handelt es sich um Dipropylenglykoldiacrylat als Reaktivverdünner für strahlungshärtbare Lacke.

Bei Irgacure® 500 der BASF SE, Ludwigshafen handelt es sich um eine flüssige Mischung zweier Photoinitiatoren 50 % 1-Hydroxy-cyclohexyl-phenyl-keton und 50 % Benzophenon.

| Beispiel | 1 | 2 (Vergleich) | 3 (Vergleich) | 4 (Vergleich) | 5 (Vergleich) |
|---|---|---|---|---|---|
| Laromer® LR 9013 | 64,0 Teile | 70,9 Teile | 79,5 Teile | 64,0 Teile | 79,5 Teile |
| Laromer® PA 9083 | 8,6 Teile | 8,6 Teile | | 8,6 Teile | |
| Propylheptylacrylat | 21,5 Teile | | | | |
| DPGDA | | | | 30,0 Teile | 30,0 Teile |
| Laurylacrylat | 5,4 Teile | | | | |
| Darocur® 1173 | 3,0 Teile | 3,0 Teile | 3,0 Teile | 3,0 Teile | 3,0 Teile |
| Säurezahl [mg KOH/g] | Ca. 25 | Ca. 25 | -- | Ca. 25 | -- |
| Haftung Gitterschnitt | 0 | 4-5 | 5 | 1-2 | 5 |

Die Haftung mit Gitterschnitt wurde bestimmt gemäß DIN EN ISO 2409. Darin bedeutet die Bewertung 0 eine sehr gute Haftung bis Bewertung 5 keine Haftung.

Bei Laromer® PA 9013 der BASF SE, Ludwigshafen handelt es sich um ein handelsübliches, mit einem Dispergierharz auf Basis iso-Butyraldehyd, Harnstoff und Formaldehyd (erfindungsgemäße Komponente (A)) modifiziertes, trifunktionelles Polyetheracrylat (erfindungsgemäße Komponente (B)).

Bei Laromer® PA 9083 der BASF SE, Ludwigshafen handelt es sich um einen handelsüblichen acrylierten Phosphorsäureester (erfindungsgemäße Komponente (C)).

Bei Darocur® 1173 handelt es sich um einen flüssigen Photoinitiator 2-Hydroxy-2-methyl-1-phenyl-propan-1-on (CAS No. 7473-98-5)

Anhand der Beispiele sieht man, daß
- ein Harz mit geringem Schrumpf (Laromer® LR 9013) allein (Beispiel 3) oder in Kombination mit einem Reaktivverdünner (Beispiel 5) eine schlechte Haftung ergibt
- die Zumischung eines Harzes mit sauren Gruppen (Laromer® PA 9083) allein die Haftung nur wenig verbessert (Beispiel 2)
- erst durch Kombination der Zumischung eines Harzes mit sauren Gruppen (Laromer® PA 9083) mit einem Reaktivverdünner (Beispiel 4) die Haftung verbessert wird, und
- dieses Ergebnis optimiert wird durch Verwendung von hydrophoben Reaktivverdünnern (Beispiel 1).

## Patentansprüche

1. Strahlungshärtbare Formulierungen, enthaltend
(A) mindestens ein Kondensationsharz, aufgebaut aus Harnstoff oder Harnstoffderivaten a1) und Ketonen oder Aldehyden a2), welche ausgewählt sind aus C-H aciden Aldehyden bzw. Ketonen oder deren Gemische mit Formaldehyd,
(B) mindestens einer strahlungshärtbare Verbindung mit mindestens 2 Acryloyl- oder Methacryloylgruppen,
(C) mindestens einer strahlungshärtbaren Verbindung mit freien Säuregruppen,
(D) mindestens einem (Meth)acrylsäurealkylester, dessen Alkylrest mindestens 8 Kohlenstoffatome aufweist,
(E) optional mindestens ein Lackhilfsmittel und/oder Additiv, bevorzugt zur Veränderung der Benetzungseigenschaften und/oder Verlaufseigenschaften, sowie
(F) optional mindestens ein Photoinitiator, wobei die Formulierung eine Säurezahl gemäß DIN EN ISO 3682 (potentiometrisch) von 10 bis 100 mg KOH/g, bezogen auf die Summe der Komponenten (A) bis (F), aufweist.

2. Formulierung gemäß Anspruch 1, **dadurch gekennzeichnet, daß** es sich bei der Komponente (a1) um Harnstoff handelt.

3. Formulierung gemäß einem der vorstehenden Ansprüche, **dadurch gekennzeichnet, daß** es sich bei der Komponente (a2) um CH-acide Aldehyde oder deren Gemische mit Formaldehyd handelt.

4. Formulierung gemäß einem der vorstehenden Ansprüche, **dadurch gekennzeichnet, daß** es sich bei Komponente (B) (Meth)Acrylate von Verbindungen der Formel (IVa) bis (IVd) handelt, 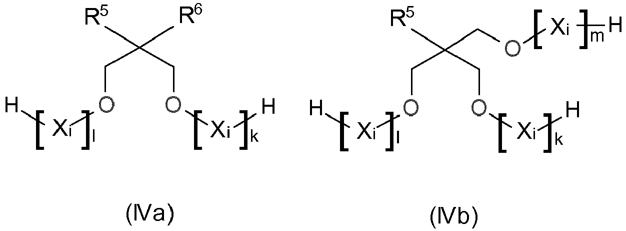 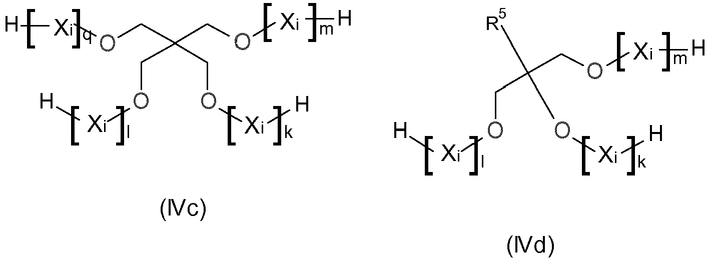 worin
R⁵ und R⁶ unabhängig voneinander Wasserstoff oder gegebenenfalls durch Aryl, Alkyl, Aryloxy, Alkyloxy, Heteroatome und/oder Heterocyclen substituiertes C₁-C₁₈-Alkyl,
k, l, m, q unabhängig voneinander je für eine ganze Zahl von 1 bis 10, bevorzugt 1 bis 5 und besonders bevorzugt 1 bis 3 steht und
jedes Xᵢ für i = 1 bis k, 1 bis I, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O-und -CHPh-CH₂-O-, bevorzugt aus der Gruppe -CH₂-CH₂-O-, -CH₂-CH(CH₃)-O-und -CH(CH₃)-CH₂-O-, und besonders bevorzugt -CH₂-CH₂-O-,
worin Ph für Phenyl und Vin für Vinyl steht.

5. Formulierung gemäß einem der vorstehenden Ansprüche, **dadurch gekennzeichnet, daß** es sich bei Komponente (C) um Verbindungen der Formeln (Va) und (Vb), sowie deren Gemische handelt 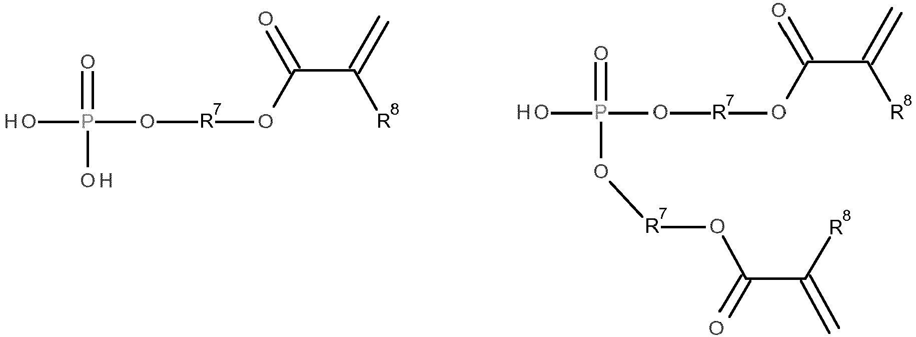 worin
R⁷ C₂ bis C₆-Alkylen und
R⁸ Wasserstoff oder Methyl
bedeuten.

6. Formulierung gemäß einem der vorstehenden Ansprüche, **dadurch gekennzeichnet, daß** Komponente (D) ausgewählt aus der Gruppe bestehend aus n-Octylacrylat, 2-Ethylhexylacrylat, 3-Propylheptylacrylat, n-Decylacrylat, Laurylacrylat, n-Octylmethacrylat, 2-Ethylhexylmethacrylat, 3-Propylheptylmethacrylat, n-Decylmethacrylat und Laurylmethacrylat.

7. Formulierung gemäß einem der vorstehenden Ansprüche, **dadurch gekennzeichnet, daß** sie zusammengesetzt ist wie folgt:
(A) 20 bis 50 Gew%, bevorzugt 30 bis 35 Gew%
(B) 20 bis 40 Gew%, bevorzugt 25 bis 30 Gew%
(C) 2 bis 10 Gew%, bevorzugt 4 bis 8 Gew%
(D) 10 bis 30 Gew%, bevorzugt 15 bis 25 Gew%
(E) 1 bis 10 Gew%, bevorzugt 3 bis 8 Gew%
(F) 0,5 bis 5 Gew%, bevorzugt 2 bis 4 Gew%
mit der Maßgabe, daß die Summe immer 100 Gew% beträgt.

8. Verfahren zur Beschichtung von Folien, in dem man eine Formulierung gemäß einem der vorstehenden Ansprüche auf eine Folie aus Papier und/oder Vliesen, die mit Melamin-Formaldehyd-Harzen imprägniert sind, aufbringt, zumindest teilweise durch Strahlung härtet, optional mit einem Dekordruck versieht, anschließend mindestens eine weitere strahlungshärtbare Beschichtungsmasse aufbringt und abschließend durch Strahlung vollständig härtet.

9. Verwendung von Formulierungen gemäß einem der Ansprüche 1 bis 7 zur Beschichtung von Folien aus Papier und/oder Vliesen, die mit Melamin-Formaldehyd-Harzen imprägniert sind.

10. Verwendung von Folien gemäß Anspruch 8 oder 9 zur Beschichtung von Holz, Holzwerkstoffen und holzhaltigen Substraten.

## Claims

1. A radiation-curable formulation comprising
(A) at least one condensation resin synthesized from urea or urea derivatives a1) and ketones or aldehydes a2) selected from C-H acidic aldehydes and ketones or mixtures thereof with formaldehyde,
(B) at least one radiation-curable compound having at least 2 acryloyl or methacryloyl groups,
(C) at least one radiation-curable compound having free acid groups,
(D) at least one (meth)acrylic acid alkyl ester whose alkyl radical has at least 8 carbon atoms,
(E) optionally at least one coatings auxiliary and/or additive, preferably for modifying the wetting properties and/or flow properties, and
(F) optionally at least one photoinitiator, the formulation having an acid number to DIN EN ISO 3682 (potentiometric) of 10 to 100 mg KOH/g, based on the sum of components (A) to (F).

2. The formulation according to claim 1, wherein component (a1) is urea.

3. The formulation according to either of the preceding claims, wherein component (a2) comprises CH-acidic aldehydes or mixtures thereof with formaldehyde.

4. The formulation according to any of the preceding claims, wherein component (B) comprises (meth)acrylates of compounds of the formula (IVa) to (IVd), 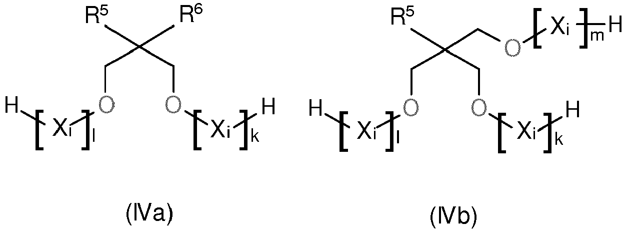 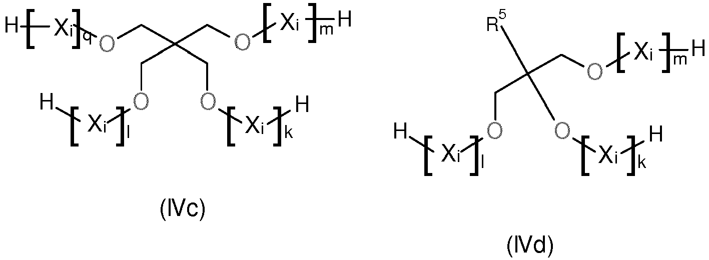 in which
R⁵ and R⁶ independently of one another are hydrogen or are C₁-C₁₈-alkyl which is optionally substituted by aryl, alkyl, aryloxy, alkyloxy, heteroatoms and/or heterocycles,
k, 1, m and q independently of one another are each an integer from 1 to 10, preferably 1 to 5, and more preferably 1 to 3, and
each Xᵢ or i = 1 to k, 1 to 1, 1 to m, and 1 to q, independently of one another, may be selected from the group -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-,-CHVin-CH₂-O-, -CH₂-CHPh-O-, and -CHPh-CH₂-O-, preferably from the group -CH₂-CH₂-O-, -CH₂-CH(CH₃)-0- and -CH(CH₃)-CH₂-O-, and more preferably -CH₂-CH₂-0-,
in which Ph is phenyl and Vin is vinyl.

5. The formulation according to any of the preceding claims, wherein component (C) comprises compounds of the formulae (Va) and (Vb), and also mixtures thereof 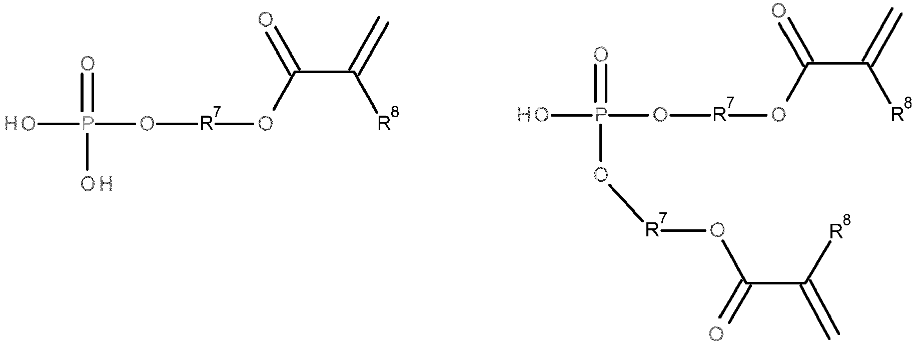 in which
R⁷ is C₂ to C₆ alkylene and
R⁸ is hydrogen or methyl.

6. The formulation according to any of the preceding claims, wherein component (D) is selected from the group consisting of n-octyl acrylate, 2-ethylhexyl acrylate, 3-propylheptyl acrylate, n-decyl acrylate, lauryl acrylate, n-octyl methacrylate, 2-ethylhexyl methacrylate, 3-propylheptyl methacrylate, n-decyl methacrylate, and lauryl methacrylate.

7. The formulation according to any of the preceding claims, having the following compositions:
(A) 20 to 50 weight%, preferably 30 to 35 weight%
(B) 20 to 40 weight%, preferably 25 to 30 weight%
(C) 2 to 10 weight%, preferably 4 to 8 weight%
(D) 10 to 30 weight%, preferably 15 to 25 weight%
(E) 1 to 10 weight%, preferably 3 to 8 weight%
(F) 0.5 to 5 weight%, preferably 2 to 4 weight%
with the proviso that the sum total is always 100 weight%.

8. A process for coating sheets by applying a formulation according to any of the preceding claims to a sheet of paper and/or nonwovens which have been impregnated with melamine-formaldehyde resins, carrying out at least partial radiation curing, optionally applying a decorative print, subsequently applying at least one further radiation-curable coating material, and, finally, carrying out complete curing by radiation.

9. The use of a formulation according to any of claims 1 to 7 to coat sheets of paper and/or nonwovens which have been impregnated with melamine-formaldehyde resins.

10. The use of sheets according to claim 8 or 9 to coat wood, woodbase materials, and wood-containing substrates.

## Revendications

1. Formulations durcissables sous l'effet d'un rayonnement, contenant
(A) au moins une résine de condensation, formée à partir d'urée ou de dérivés d'urée a1) et de cétones ou d'aldéhydes a2), qui sont choisis parmi les aldéhydes ou les cétones C-H-acides ou leurs mélanges avec du formaldéhyde,
(B) au moins un composé durcissable sous l'effet d'un rayonnement présentant au moins 2 groupes acryloyle ou méthacryloyle,
(C) au moins un composé durcissable sous l'effet d'un rayonnement présentant des groupes acides libres,
(D) au moins un ester alkylique de l'acide (méth)acrylique, dont le radical alkyle présente au moins 8 atomes de carbone,
(E) éventuellement au moins un adjuvant de laque et/ou un additif, de préférence pour modifier les propriétés de mouillage et/ou les propriétés d'étalement, ainsi que
(F) éventuellement au moins un photo-initiateur, la formulation présentant un indice d'acide selon la norme DIN EN ISO 3682 (par potentiométrie) de 10 à 100 mg de KOH/g, par rapport à la somme des composants (A) à (F).

2. Formulation selon la revendication 1, **caractérisée en ce qu'**il s'agit, pour le composant (a1), d'urée.

3. Formulation selon l'une quelconque des revendications précédentes, **caractérisée en ce qu'**il s'agit, pour le composant (a2), d'aldéhydes CH-acides ou de leurs mélanges avec du formaldéhyde.

4. Formulation selon l'une quelconque des revendications précédentes, **caractérisée en ce qu'**il s'agit, pour le composant (B), de (méth)acrylates de composés des formules (IVa) à (IVd), 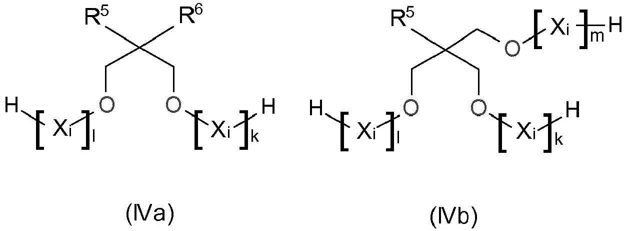 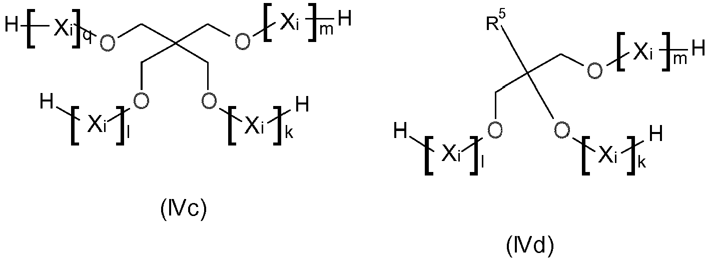 dans lesquelles
R⁵ et R⁶ représentent, indépendamment l'un de l'autre, hydrogène ; ou C₁-C₁₈-alkyle le cas échéant substitué par aryle, alkyle, aryloxy, alkyloxy, des hétéroatomes et/ou des hétérocycles,
k, 1, m, q représentent, indépendamment les uns des autres, à chaque fois un nombre entier de 1 à 10, de préférence de 1 à 5 et de manière particulièrement préférée de 1 à 3 et
chaque Xᵢ, pour i = 1 à k, 1 à 1, 1 à m et 1 à q, peut être choisi, indépendamment les uns des autres, dans le groupe formé par -CH₂-CH₂-O-, -CH₂-CH(CH₃)-O-, -CH(CH₃)-C-H₂-O-, -CH₂-C(CH₃)₂-O-, -C(CH₃)₂-CH₂-O-, -CH₂-CHVin-O-, -CHVin-CH₂-O-, -CH₂-CHPh-O- et -CHPh-CH₂-O-, de préférence dans le groupe formé par -CH₂-CH₂-O-, -CH₂-CH(CH₃)-O- et -CH(CH₃)-CH₂-O- et est de manière particulièrement préférée -CH₂-CH₂-O-,
Ph représentant phényle et Vin représentant vinyle.

5. Formulation selon l'une quelconque des revendications précédentes, **caractérisée en ce qu'**il s'agit, pour le composant (C), de composés des formules (Va) et (Vb) ainsi que de leurs mélanges 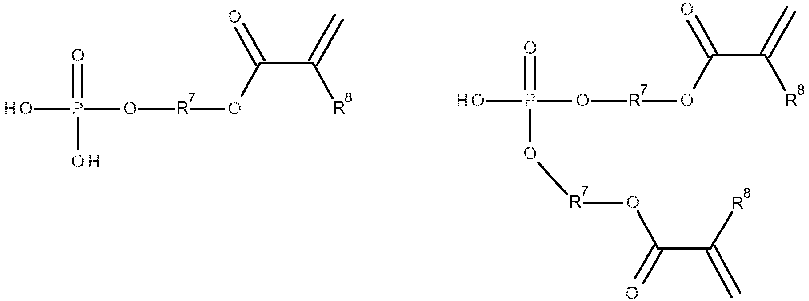 dans lesquelles
R⁷ signifie C₂-C₆-alkylène et
R⁸ signifie hydrogène ou méthyle.

6. Formulation selon l'une quelconque des revendications précédentes, **caractérisée en ce que** le composant (D) est choisi dans le groupe constitué par l'acrylate de n-octyle, l'acrylate de 2-éthylhexyle, l'acrylate de 3-propylheptyle, l'acrylate de n-décyle, l'acrylate de lauryle, le méthacrylate de n-octyle, le méthacrylate de 2-éthylhexyle, le méthacrylate de 3-propylheptyle, le méthacrylate de n-décyle et le méthacrylate de lauryle.

7. Formulation selon l'une quelconque des revendications précédentes, **caractérisée en ce qu'**elle est composée comme suit :
(A) 20 à 50% en poids, de préférence 30 à 35% en poids
(B) 20 à 40% en poids, de préférence 25 à 30% en poids
(C) 2 à 10% en poids, de préférence 4 à 8% en poids
(D) 10 à 30% en poids, de préférence 15 à 25% en poids
(E) 1 à 10% en poids, de préférence 3 à 8% en poids
(F) 0,5 à 5% en poids, de préférence 2 à 4% en poids
à condition que la somme fasse toujours 100% en poids.

8. Procédé pour le revêtement de feuilles dans lequel on applique une formulation selon l'une quelconque des revendications précédentes sur une feuille en papier et/ou en non-tissés, qui sont imprégnées de résines de mélamine-formaldéhyde, on durcit au moins partiellement par un rayonnement, on décore éventuellement par une impression décorative, on applique ensuite au moins une autre masse de revêtement durcissable sous l'effet d'un rayonnement et on durcit enfin complètement par rayonnement.

9. Utilisation de formulations selon l'une quelconque des revendications 1 à 7 pour le revêtement de feuilles en papier et/ou en non-tissés, qui sont imprégnées de résines de mélamine-formaldéhyde.

10. Utilisation de feuilles selon la revendication 8 ou 9 pour le revêtement de bois, de matériau à base de bois et de substrats contenant du bois.
